(19) **Europäisches Patentamt**

**European Patent Office**

**Office européen des brevets**

(11) **EP 1 724 607 A1**

(12) **DEMANDE DE BREVET EUROPEEN**

(43) Date de publication:
   **22.11.2006 Bulletin 2006/47**

(51) Int Cl.:
   *G01S 5/14* (2006.01)   *G01S 1/00* (2006.01)

(21) Numéro de dépôt: **06118126.9**

(22) Date de dépôt: **12.07.2004**

(84) Etats contractants désignés:
   **AT BE BG CH CY CZ DE DK EE ES FI FR GB GR HU IE IT LI LU MC NL PL PT RO SE SI SK TR**

(30) Priorité: **01.08.2003 FR 0309509**
   **10.03.2004 FR 0450480**

(62) Numéro(s) de document de la (des) demande(s) initiale(s) en application de l'article 76 CBE:
   **04291781.5 / 1 503 220**

(71) Demandeur: **ALCATEL**
   **75008 Paris (FR)**

(72) Inventeurs:
   • **Monnerat, Michel**
     **31240 L'Union (FR)**

   • **Masson, Arnaud**
     **31170 Tournefeuille (FR)**
   • **Lobert, Bruno**
     **31320 Pechabou (FR)**

(74) Mandataire: **Hedarchet, Stéphane**
   **Compagnie Financière Alcatel**
   **Intellectual Property Group**
   **54, rue de la Boétie**
   **F-75008 Paris (FR)**

Remarques:
   Cette demande a été déposée le 28 - 07 - 2006 comme demande divisionnaire de la demande mentionnée sous le code INID 62.

(54) **Enrichissement de données d'assistance de navigation pour la détermination de la position d'un terminal mobile**

(57)   Un procédé d'enrichissement de données d'assistance de navigation pour la détermination de la position d'un terminal mobile, selon lequel un serveur de données d'assistance de navigation dans un réseau de téléphonie mobile enrichit ses données d'assistance à destination du terminal mobile grâce à des corrections diffusées par un système SBAS (du type WAAS, EGNOS, MSAS, etc...), lesdits enrichissements pouvant en outre être établis selon l'un des procédés suivants :
- diffusion d'un modèle de navigation (Ephémerides) modifié de telle sorte qu'il prenne en compte une partie des corrections SBAS,
- diffusion de corrections différentielles locales calculées sur la base des corrections diffusées par un système SBAS (du type WAAS, EGNOS, MSAS, etc...).

EP 1 724 607 A1

**EP 1 724 607 A1**

**Description**

L'invention conceme la détermination du positionnement par satellites de terminaux mobiles.

On entend ici par « terminal mobile » aussi bien les dispositifs (ou récepteurs) dédiés exclusivement au positionnement par satellites que les terminaux de communication équipés d'un dispositif de positionnement par satellites, comme par exemple des téléphones mobiles, ou des assistants personnels numériques (ou PDA), éventuellement de type communicant.

Comme le sait l'homme de l'art, le positionnement par satellites consiste en un enchaînement de deux étapes. La première étape, dite d'acquisition, consiste à déterminer, au niveau du terminal mobile concerné, les codes pseudo-aléatoires qui modulent des signaux provenant de satellites, dits « en vue », appartenant à une constellation de satellites de positionnement et rapportés à un temps de référence, généralement appelé « temps système ». Il s'agit en fait de « comparer » les signaux reçus des satellites en vue à des répliques de signaux résultant d'hypothèses sur le temps système et sur la fréquence de cadencement des satellites, afin d'en déduire les codes pseudo-aléatoires qui modulent lesdits signaux reçus ou en d'autres termes de synchroniser l'horloge de cadencement du terminal et sa fréquence sur l'horloge et la fréquence de chaque satellite en vue. Pour ce faire, on effectue habituellement des mesures de corrélation reposant sur des couples d'hypothèses temporelle et fréquentielle.

On entend ici par « constellation de satellites de positionnement », un réseau de positionnement de type RNSS (pour « Radio Navigation Satellite Service »), comme par exemple le réseau GPS, ou le réseau GLONASS, ou encore le futur réseau GALILEO.

La seconde étape consiste à déterminer la position du terminal à partir des codes acquis et de données de navigation notamment contenues dans les signaux reçus. Cette seconde étape peut être plus précisément subdivisée en trois sous-étapes : une sous-étape de détermination à partir des codes pseudo-aléatoires acquis des temps de propagation des signaux entre chacun des satellites en vue et le terminal, une sous-étape de détermination, à partir des données de navigation contenues dans les signaux et des temps de propagation, de pseudo-distances entre le terminal et chacun des satellites en vue, et une sous-étape de détermination de la position du terminal à partir des pseudo-distances (au moins par une quadrilatération, et plus généralement par une résolution numérique de type méthode des moindres carrés à quatre inconnues et au moins quatre mesures). Quatre mesures sont nécessaires pour résoudre les quatre inconnues. Dans certaines conditions seules trois mesures sont utilisées en fixant une inconnue, typiquement l'altitude (Z) du récepteur, ou bien on peut effectuer des hybridations avec des mesures extérieures.

La précision de chaque temps de propagation, et donc de chaque pseudo-distance, détermine directement la précision de la position. Or, la précision de chaque temps de propagation dépend de la qualité de l'acquisition des codes pseudo-aléatoires du signal reçu correspondant, laquelle est dépendante de la qualité dudit signal reçu. Par conséquent, lorsque l'un au moins des signaux reçus d'un satellite en vue est de mauvaise qualité, ce qui est relativement fréquent, notamment dans les environnements accidentés ou encombrés, la position déterminée est généralement entachée d'erreur. On peut même se trouver momentanément dans l'impossibilité de déterminer la position du terminal, alors même que les signaux provenant des autres satellites en vue sont de bonne qualité.

La Demanderesse a, dans la demande parente à la présente demande, présenté une solution permettant d'améliorer la situation.

La présente invention a pour but d'économiser la quantité de données transmises du serveur d'assistance vers le terminal.

A cet effet, l'invention propose un procédé d'enrichissement de données d'assistance de navigation pour la détermination de la position d'un terminal mobile, selon lequel un serveur de données d'assistance de navigation dans un réseau de téléphonie mobile enrichit ses données d'assistance à destination du terminal mobile grâce à des corrections diffusées par un système SBAS (du type WAAS, EGNOS, MSAS, etc...), lesdits enrichissements pouvant en outre être établis selon l'un des procédés suivants :

- diffusion d'un modèle de navigation (Ephémerides) modifié de telle sorte qu'il prenne en compte une partie des corrections SBAS,
- diffusion de corrections différentielles locales calculées sur la base des corrections diffusées par un système SBAS (du type WAAS, EGNOS, MSAS, etc...).

Il y est également décrit un procédé dédié à la détermination de la position d'un terminal mobile et comprenant, comme le procédé de l'art antérieur, une étape d'acquisition de codes pseudo-aléatoires, suivie d'une étape de détermination de la position du terminal à partir des codes pseudo-aléatoires acquis et des données de navigation contenues dans les signaux reçus.

Ce procédé se caractérise par le fait qu'à l'étape d'acquisition :

• on transmet au terminal, de préférence à sa demande, des données d'assistance représentatives du temps de référence approximatif de la constellation et de sa position approximative,

- puis, on détermine des positions estimatives de la constellation, des distances estimatives entre le terminal et chacun des satellites en vue, et des effets doppler associés, en fonction de couples d'hypothèses portant sur le temps de référence approximatif et la position approximative reçus,

- puis, on détermine pour chaque couple d'hypothèses une réplique de signal correspondant aux positions et distances estimatives et aux effets doppler associés sur un intervalle de temps choisi, et

- on sélectionne le couple d'hypothèses qui correspond à la réplique de signal qui présente une corrélation maximale avec le signal reçu pendant l'intervalle de temps choisi, afin de déterminer les codes pseudo-aléatoires qui modulent chacun des signaux reçus.

En d'autres termes, on réalise une recherche « position géographique /temps système », en réalisant une corrélation du signal avec le signal composite égal à la somme des répliques affectées du retard et du doppler correspondant à une grille définissant la position du récepteur (et donc de son utilisateur) et le temps système.

Ainsi, contrairement au procédé antérieur, la détermination des codes pseudo-aléatoires, associés à chacun des signaux provenant des satellites en vue, s'effectue après une phase commune d'accumulation pendant une durée (intervalle) choisie de la puissance de tous les signaux reçus. Cela permet d'améliorer notablement le seuil de détection car toute la puissance disponible est cumulée lors de la recherche.

Le procédé selon l'invention peut comporter d'autres caractéristiques qui pourront être prises séparément ou en combinaison, et notamment :

- les données d'assistance sont transmises au terminal via le réseau de communications dont il dépend,

- les données d'assistance peuvent comporter des données « d'augmentation », telles que des éphémérides, provenant d'un système dit « d'augmentation », de type SBAS (pour « Satellite Based Augmentation System »),

- lorsque le terminal mobile est un terminal de communication appartenant à un réseau de communications cellulaire dont chaque cellule est gérée par une station de base, la position approximative est préférentiellement représentative de la cellule dans laquelle il est situé lorsqu'il requiert lesdites données d'assistance. Dans ce cas, il est avantageux de fournir au terminal des aides en fréquence et en temps grâce à la station de base, les aides en fréquence faisant référence à un recalage de son oscillateur local grâce à l'oscillateur de la station de base. A cet effet, on peut par exemple asservir l'horloge de cadencement du terminal, utilisée pour déterminer sa position, sur l'horloge de cadencement de la station de base qui gère la cellule dans laquelle il est situé,

- la sélection d'une réplique de signal peut consister à déterminer pour chaque réplique de signal une fonction représentative de son énergie de corrélation avec le signal reçu, cumulé dans le temps sur l'intervalle de temps choisi, puis à retenir la réplique de signal qui présente l'énergie la plus forte,

- les données d'assistance peuvent comprendre des données de navigation complémentaires choisies parmi les éphémérides des satellites en vue, des premières corrections temporelles des satellites en vue, représentatives de l'écart temporel entre le temps de référence et leur horloge de cadencement, des secondes corrections temporelles représentatives des perturbations induites par l'ionosphère sur la propagation des signaux transmis par les satellites en vue, et des données représentatives d'un modèle tridimensionnel (3D) de la cellule dans laquelle le terminal requérant est situé,

- on peut procéder au niveau de chaque terminal à la transmission à un serveur de données d'information (serveur d'assistance) représentatives de sa position, de manière à mémoriser cette position en correspondance de l'identifiant de la cellule dans laquelle il est situé. Dans ce cas, on peut également mémoriser des données auxiliaires, représentatives de la qualité des données d'information transmises, en correspondance de l'identifiant de la cellule. On peut ainsi générer un modèle tridimensionnel du réseau de communications à partir des identifiants de cellule et des données d'information et/ou données auxiliaires correspondantes. En d'autres termes, dans le cas d'un mode de fonctionnement de type « MS-assisted » ou « MS-Based », le terminal renvoie vers le serveur d'assistance sa position ainsi que le numéro de sa cellule. Le serveur peut donc tenir à jour un historique des positions (x, y, z) de tous les mobiles qui ont réalisé une localisation dans la cellule. Il en résulte un modèle numérique 3D de terrain ainsi que qu'une information sur la couverture de la cellule. Les endroits où aucun point n'aura été réalisé mettront en évidence un problème de couverture. De même en transmettant les conditions de réception, on peut améliorer le niveau de détail de la cartographie,

- on peut effectuer des mesures représentatives de la dynamique du terminal mobile, par exemple à l'aide de dispositifs micro-inertiels (de type MEMS), puis estimer, à partir de ces mesures et des données d'assistance, une vitesse, une accélération et une variation d'accélération par rapport à chaque satellite en vue, puis déduire de celles-ci une phase induite, et enfin déterminer la réplique de signal compte tenu de la phase induite.

L'invention porte également sur un terminal mobile comprenant des moyens d'acquisition de codes pseudo-aléatoires qui modulent des signaux reçus de satellites en vue appartenant à une constellation de satellites de positionnement et rapportés à un temps de référence, par « comparaison » à des répliques de signaux résultant d'hypothèses, et des moyens de calcul chargés de déterminer la position du terminal à partir des codes acquis et des données de navigation contenues dans les signaux reçus.

Ce terminal mobile se caractérise par le fait que ses moyens d'acquisition sont chargés, lorsqu'ils reçoivent des données d'assistance représentatives d'un temps de référence approximatif et de la position approximative dudit terminal, de préférence consécutivement à une requête, de déterminer des positions estimatives de la constellation de satellites, des distances estimatives entre le terminal et chacun des satellites en vue, et des effets doppler associés, en fonction de couples d'hypothèses portant sur le temps de référence approximatif et la position approximative, puis de déterminer pour chaque couple d'hypothèses une réplique de signal correspondant aux positions et distances estimatives et aux effets doppler associés, sur un intervalle de temps choisi, et enfin de sélectionner le couple d'hypothèses qui correspond à la réplique du signal composite (somme des répliques affectées du doppler et du décalage temporel correspondant aux hypothèses) qui présente la corrélation maximale, sur l'intervalle de temps choisi, avec le signal reçu, afin de réaliser l'acquisition du signal (synchronisation sur les signaux des différents satellites ou ici pré-localisation du terminal (ou récepteur)).

Le terminal mobile selon l'invention peut comporter d'autres caractéristiques qui pourront être prises séparément ou en combinaison, et notamment :

- des moyens de réception agencés pour recevoir des trames SBAS d'un système d'augmentation, de type SBAS, couplé au système de navigation par satellites,
- il peut être agencé de manière à communiquer au sein d'un réseau de communications cellulaire, la position approximative reçue étant alors représentative de la cellule dans laquelle il est situé au moment où il a requis les données d'assistance. Dans ce cas, le terminal peut être agencé de manière à se servir d'aides en fréquence et en temps fournies par la station de base du réseau cellulaire à laquelle il est momentanément rattaché. Par exemple, l'horloge de cadencement des moyens d'acquisition est préférentiellement asservie sur l'horloge de cadencement de la station de base qui gère la cellule dans laquelle il est situé,
- des moyens d'acquisition chargés de corréler une réplique particulière avec le signal reçu pendant l'intervalle de temps choisi, par exemple à l'aide d'une fonction représentative d'une énergie de corrélation, afin d'identifier un code d'étalement,
- il peut être configuré de manière à transmettre à un serveur (d'assistance) des données d'information représentatives de sa position, afin que celles-ci puissent être stockées dans une base de données en correspondance de l'identifiant de la cellule dans laquelle il est situé,
- il peut comprendre un dispositif de mesure à micro inertie, agencé de préférence sous la forme d'un micro système électromécanique (ou MEMS) et propre à délivrer des mesures représentatives de la dynamique dudit terminal. Dans ce cas, les moyens d'acquisition sont agencés pour estimer à partir des mesures et des données d'assistance une vitesse, une accélération et une variation d'accélération par rapport à chaque satellite en vue, et déduire de celles-ci une phase induite, puis pour déterminer la réplique de signal compte tenu de la phase induite.

L'invention porte en outre sur un serveur d'assistance couplé à un réseau de communications cellulaire, et agencé de manière à transmettre à des terminaux mobiles du type de ceux présentés ci-avant, lorsqu'ils en font la demande, des données d'assistance, préférentiellement via leur réseau de communications mobile.

Ce serveur peut par exemple transmettre aux terminaux requérant des données d'assistance comprenant des données de navigation complémentaires choisies dans un groupe comprenant au moins des éphémérides des satellites en vue, des premières corrections temporelles des satellites en vue, représentatives de l'erreur d'horloge des satellites par rapport à l'heure de la constellation de satellites de positionnement, des secondes corrections temporelles représentatives des perturbations induites par l'ionosphère sur la propagation des signaux transmis par les satellites en vue et des données représentatives d'un modèle tridimensionnel de la cellule dans laquelle le terminal requérant est situé.

Le serveur peut également comprendre des moyens de traitement chargés, lorsqu'ils reçoivent des données d'information représentatives de la position d'un terminal, de les stocker dans une base de données en correspondance de l'identifiant de la cellule du réseau de communications cellulaire dans laquelle ce terminal est situé. Dans ce cas, les moyens de traitement peuvent être également agencés pour déterminer, des données auxiliaires représentatives de la qualité des données d'information reçues, puis les mémoriser en correspondance de l'identifiant de cellule.

Par ailleurs, les moyens de traitement peuvent être chargés de générer, puis de mémoriser dans la base de données, un modèle tridimensionnel du réseau de communications à partir des identifiants de cellules et des données d'information et/ou données auxiliaires correspondantes. Ils peuvent être également chargés d'extraire de la base de données une portion du modèle tridimensionnel du réseau de communications, représentative du modèle tridimensionnel de la cellule dans laquelle est situé le terminal requérant, de manière à lui transmettre cette portion de modèle 3D représentant le terrain de la cellule dans laquelle il se trouve. Le maillage (position géographique/temps système) est ainsi enrichi. De plus, cela peut permettre de déterminer la position du terminal mobile avec seulement trois satellites en vue (il n'y a plus alors que trois inconnues indépendantes puisque l'altitude Z est connue pour tout couple (X,Y)).

En variante, les moyens de traitement peuvent être seulement agencés pour extraire d'une base de données, dans laquelle sont stockées des portions d'un modèle tridimensionnel du réseau de communications en correspondance d'identifiants de cellules, la portion de modèle qui est stockée en correspondance de l'identifiant de la cellule dans laquelle un terminal requérant est situé, de manière à lui transmettre cette portion extraite.

L'invention est particulièrement bien adaptée, bien que de façon non limitative, aux signaux en bande L modulés en phase et à accès multiple, en particulier selon la technique dite W-CDMA. Par ailleurs, l'invention est particulièrement bien adaptée, bien que de façon non limitative, aux réseaux de positionnement par satellites de type GNSS, et plus particulièrement à ceux de type GPS, et aux systèmes d'augmentation de type SBAS.

D'autres caractéristiques et avantages de l'invention apparaîtront à l'examen de la description détaillée ci-après, et des dessins annexés, sur lesquels :

- la figure 1 illustre de façon schématique un exemple de réalisation d'une installation de télécommunication,
- la figure 2 illustre de façon schématique un exemple de réalisation d'un terminal de communication mobile,
- la figure 3 illustre une méthode d'enrichissement des informations de l'environnement tridimensionnel d'un terminal.

Les dessins annexés pourront non seulement servir à compléter l'invention, mais aussi contribuer à sa définition, le cas échéant.

L'invention porte sur la détermination de positions de terminaux mobiles au sein d'une installation de télécommunications.

On entend ici par « installation de télécommunications », une installation comportant au moins un réseau de communications communiquant avec des terminaux mobiles et un système dit « d'assistance » (ou d'aide) chargé de diffuser des données d'assistance, et notamment des données de navigation complémentaires concernant un système de positionnement, comme par exemple un réseau de positionnement par satellites.

Par ailleurs, on entend ici par « terminal mobile » (UE), tout type de terminal capable de recevoir au moins des signaux contenant des données de navigation du réseau de positionnement par satellites et des données d'assistance du système d'assistance. Il pourra donc s'agir soit de simples dispositifs de positionnement par satellites portables, ou embarqués dans un véhicule terrestre, maritime ou aérien, et implémentant au moins une application liée au positionnement, soit de téléphones mobiles, d'assistants numériques personnels (ou PDA), ou d'ordinateurs portables équipés d'un tel dispositif de positionnement par satellites et implémentant également au moins une application liée au positionnement.

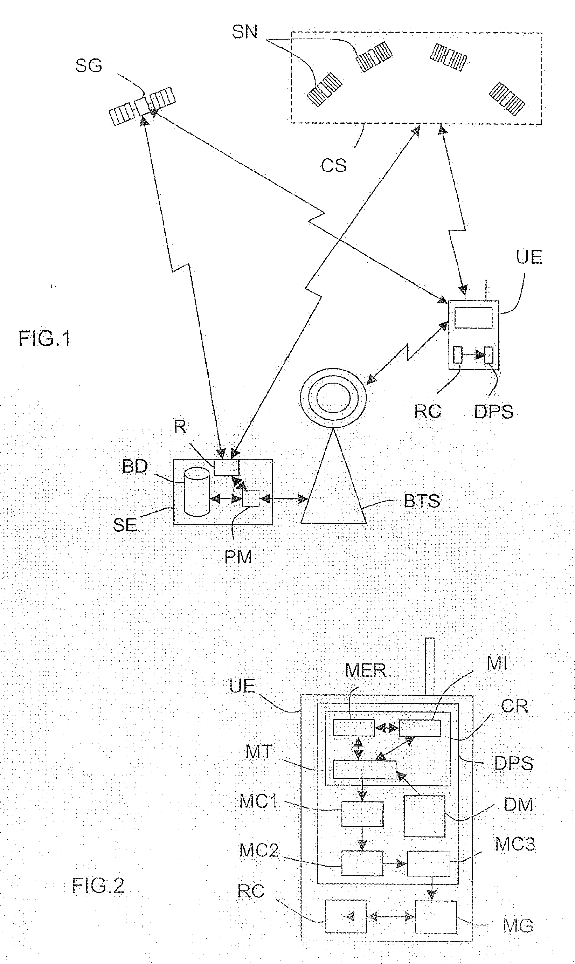

Dans ce qui suit on considèrera, à titre d'exemple, comme illustré sur la figure 1, que l'installation comporte non seulement au moins un réseau de communications (radio) mobile (matérialisé ici par l'une de ses stations de base BTS), mais également un réseau de positionnement par satellites (matérialisé par sa constellation CS de satellites SN). Ce réseau de communications mobile est ici de type cellulaire, comme par exemple les réseaux de type GSM/GPRS et UMTS (et tous leurs équivalents).

Bien entendu, l'installation pourrait être de type hybride. On entend ici par installation hybride une installation de communications par satellites comportant une ou plusieurs stations émettrices, un ou plusieurs satellites de télécommunications et une multiplicité de répéteurs terrestres implantés en des endroits choisis du réseau.

Le réseau de positionnement par satellites est de type RNSS (pour « Radio Navigation Satellite System »). Il s'agit par exemple du réseau GPS. Mais, il pourrait s'agir de tout autre type de réseau RNSS, comme par exemple le réseau GLONASS ou le futur réseau GALILEO, ou bien d'une combinaison d'au moins deux des trois réseaux précités. Ce réseau de positionnement par satellites CS peut, comme c'est le cas ici, être couplé à un système d'augmentation, comme par exemple un système SBAS (pour « Satellite Based Augmentation System »), chargé de diffuser à l'aide de satellites géostationnaires SG des trames contenant notamment des données de navigation concernant la constellation CS et générées par au moins une station au sol (non représentée). Mais, tout autre type de système d'augmentation peut être envisagé qu'il soit local ou accessible via le réseau Internet.

Le réseau de communications cellulaire comporte un serveur d'assistance SE qui est ici raccordé à la station de base BTS pour des raisons de simplification. Ce serveur d'assistance SE comporte, ici, un récepteur de navigation R capable de recevoir les signaux GPS de la constellation CS (ou plus généralement les signaux RNSS). Ce récepteur RNSS R peut également être capable de recevoir les signaux du système d'augmentation SBAS.

On considère par ailleurs dans ce qui suit, à titre d'exemple illustratif, que les terminaux mobiles sont des téléphones mobiles UE pouvant communiquer avec le réseau cellulaire, et notamment avec ses stations de base BTS grâce à un émetteur/récepteur ER, et pouvant communiquer avec le réseau de positionnement par satellites CS et le système d'augmentation (SG) grâce à un dispositif de positionnement par satellites DPS par exemple de type GPS, ci-après appelé dispositif DPS.

La configuration de l'installation et son mode de fonctionnement global étant tout à fait classiques, ils ne seront pas décrits plus en détail. L'invention porte en effet plus particulièrement sur le procédé d'acquisition, mis en oeuvre par les terminaux mobiles en coopération avec le serveur d'assistance SE et éventuellement la (ou les) station(s) au sol du système d'augmentation. En d'autres termes, l'invention ne porte ni sur le fonctionnement du système de navigation par satellites CS, ni sur celui d'un système d'augmentation, par exemple de type SBAS, lesquels demeurent inchangés par rapport à ceux de l'art antérieur.

Les messages SBAS contiennent des données destinées à corriger les données de navigation fournies par les satellites de positionnement SN de la constellation CS, afin d'améliorer la qualité (précision, intégrité, continuité et disponibilité) du positionnement déterminé par un dispositif DPS au sein d'un téléphone mobile UE. Plus précisément, ces données SBAS permettent généralement de corriger des erreurs de synchronisation temporelle entre satellites de navigation SN et/ou des erreurs d'éphémérides et/ou des erreurs de propagation. Elles peuvent également contenir des informations relatives à l'intégrité des données de navigation et des corrections ionosphériques.

Le récepteur RNSS R du serveur d'assistance SE est donc ici non seulement chargé de récupérer les données (ou signaux GPS) provenant de la constellation CS, mais également les signaux (ou messages) SBAS émis par le satellite géostationnaire SG du système d'augmentation, afin que ledit serveur d'assistance SE enrichisse les données d'assistance, des messages d'assistance destinés aux terminaux mobiles UE, avec les données qu'ils contiennent.

Les données d'assistances sont enrichies grâce aux données du système SBAS de l'une des manières suivantes :

- Le modèle de navigation (Ephémerides) est modifié de tel sorte qu'il prenne en compte les corrections SBAS ("Fast Corrections" ou corrections rapides, "Long Term corrections" ou corrections sur le long terme, "Ionosphere Corrections" ou corrections caractéristiques de l'Ionosphère, "Clock corrections" ou corrections d'horloge)
- Le serveur diffuse vers le mobile des corrections différentielles locales calculées à partir des données SBAS. Le serveur peut en outre mettre en place une logique de choix entre :

  - des corrections différentielles locales établies grâce à un récepteur de référence lorsque le mobile à qui sont destinées ces corrections se trouve proche du récepteur de référence,
  - des corrections différentielles locales établies grâce aux corrections diffusées par les systèmes SBAS (WAAS, EGNOS, MSAS, etc...) lorsqu'un élément montre que ces corrections apportent plus de précision que celles établies par un récepteur de référence, notamment si le Mobile se trouve loin du récepteur de référence.

Il est également rappelé que les satellites de positionnement SN de la constellation CS possèdent des horloges de cadencement qui sont synchronisées entre elles, de sorte que la constellation CS dispose d'un temps de référence, également appelé temps système (ou ici temps GPS).

Par ailleurs, chaque satellite de positionnement SN est agencé de manière à émettre des spectres étalés (ou « spread spectrum ») sous la forme de signaux en bande L modulés en phase et à accès multiple et référencés par rapport au temps GPS. Par exemple, les signaux sont modulés et codés selon la technique dite W-CDMA. Ce type de modulation étant bien connu de l'homme de l'art, il ne sera pas décrit en détail. Il est simplement rappelé que la porteuse en bande L (ou autre) est modulée par étalement de spectre (BPSK) à l'aide d'un code binaire résultant de la somme (modulo 2) d'un code pseudo-aléatoire (choisi parmi une liste de codes d'étalement orthogonaux entre eux, comme par exemple les codes de Gold (ou « Gold codes »).

Plus précisément, dans le cas d'un système GPS, chaque satellite de positionnement SN émet des signaux dans la bande L1 (1575,42 MHz), modulés par deux codes pseudo-aléatoires, appelés codes C/A (ou « coarse acquisition code ») et codes P (également appelé codes Y lorsqu'ils sont encryptés), ainsi que, généralement, des signaux dans la bande L2 (1277,6 MHz) modulés par un code pseudo-aléatoire Y.

Ces signaux modulés contiennent également des données de navigation, comme par exemple le temps GPS de la constellation CS, leur instant d'émission et les éphémérides du satellite de positionnement SN qui les a émis.

Le but d'un dispositif DPS est donc tout d'abord de se synchroniser sur les signaux qu'il reçoit des satellites de positionnement SN en vue, afin de pouvoir déterminer le temps de propagation de chaque signal reçu, entre le satellite SN concerné et le téléphone mobile UE qu'il équipe, puis les données de navigation contenues dans ces signaux ainsi que les données de navigation complémentaires contenues dans les trames diffusées par le système d'augmentation (SG), et enfin la position dudit téléphone mobile UE.

Pour ce faire, et comme indiqué dans la partie introductive, le dispositif DPS met en oeuvre deux grandes étapes : une étape d'acquisition des codes pseudo-aléatoires, et une étape de détermination de position. L'invention porte principalement sur l'étape d'acquisition.

L'étape de détermination étant inchangée par rapport à celle mise en oeuvre dans les dispositifs DPS de l'art antérieur, seules ses principales sous-étapes seront évoquées plus loin.

Comme cela est mieux illustré sur la figure 2, chaque dispositif DPS comprend une carte CR dédiée à la réception des signaux (en bande L dans le cas d'un système GPS) contenant les informations de navigation, généralement sous forme de données, transmises par la constellation CS, et éventuellement des trames SBAS contenant des données de navigation complémentaires provenant du système d'augmentation (SG), ainsi qu'à l'acquisition des codes pseudo-aléatoires. Cette carte CR est par exemple calée sur les fréquences d'émission L1 et L2 des satellites de positionnement SN. La fréquence d'émission du satellite géostationnaire SG du système d'augmentation est habituellement L1. La carte CR est par ailleurs agencée de manière à recevoir les messages d'assistance provenant du réseau de téléphonie mobile.

La carte CR est donc chargée de mettre en oeuvre l'étape d'acquisition selon l'invention. Pour ce faire, elle comprend tout d'abord un module d'interrogation MI chargé, lorsqu'il l'estime nécessaire d'adresser au serveur d'assistance SE un message lui demandant de transmettre à son téléphone mobile UE des données d'assistance représentatives au moins du temps de référence (ou temps GPS, ou encore temps système) approximatif de la constellation CS (informations de synchronisation de la constellation CS) et de sa position approximative (pré-localisation sous la forme de la position de la cellule dans laquelle il se trouve, ou autre dès lors qu'elle est issue du réseau d'assistance).

Comme on le verra plus loin, ces données d'assistance peuvent également être des données de navigation complémentaires qui seront utilisées lors de l'étape de détermination de position, comme par exemple des numéros de PRN en vue, des éphémérides des satellites, des corrections ionosphériques, des corrections d'horloge, et un modèle numérique de terrain de cellule, par exemple tridimensionnel (3D).

Les messages requérant l'assistance du système d'assistance sont transmis au serveur d'assistance SE par le module d'émission/réception MER de la carte CR du terminal UE, de la même façon que des données de communication classiques. Ils contiennent bien entendu l'identifiant du téléphone mobile UE concerné. Par ailleurs, le dispositif DPS étant ici implanté dans un téléphone mobile UE appartenant à un réseau cellulaire, il est supposé être situé, au moment où il génère sa demande, dans l'une des cellules du réseau. Par conséquent, le module d'interrogation MI peut intégrer dans son message de demande d'assistance (même si ces informations restent habituellement en interne dans le réseau) la position de la cellule (ou son identifiant) dans laquelle son dispositif DPS est situé, et qu'il a obtenu du module de gestion MG du téléphone mobile UE.

Par ailleurs, il est particulièrement avantageux d'asservir l'horloge de cadencement du dispositif DPS du téléphone mobile UE sur l'horloge de cadencement de la station de base BTS qui gère la cellule dans laquelle il est situé. L'horloge de la station de base BTS est en effet beaucoup plus précise que celle du téléphone mobile UE.

Préférentiellement, le serveur d'assistance SE comporte une base de données BD contenant le temps GPS approximatif de la constellation CS et les positions d'un point de référence, par exemple le centre, de chaque cellule du réseau cellulaire. Dans le cas contraire, le serveur d'assistance SE doit interroger son réseau cellulaire pour qu'il lui transmette la position de la cellule concernée. Par ailleurs, lorsque le message de demande d'assistance requiert également des données de navigation complémentaires concernant certains satellites de positionnement, le serveur d'assistance SE écoute, par l'intermédiaire de son récepteur RNSS R, les signaux et messages de navigation issus notamment de la constellation de navigation CS.

Une fois en possession des données d'assistance le serveur d'assistance SE les communique au terminal requérant UE, via le réseau cellulaire.

La carte CR réceptionne ces données d'assistance et les communique à un module de traitement MT qu'elle comprend et qui est chargé de constituer des couples d'hypothèses sur le temps GPS effectif et sa position effective à partir du temps GPS approximatif reçu et de sa position approximative reçue.

Puis, une fois les couples d'hypothèses constitués, le module de traitement MT détermine pour chaque couple d'hypothèses des positions absolues estimatives des satellites SN de la constellation CS.

Il détermine ensuite, toujours pour chaque couple d'hypothèses, les distances estimatives entre le téléphone mobile UE et chacun des satellites de positionnement SN en vue, à partir des positions estimatives de la constellation en vue.

Puis, il détermine, également pour chaque couple d'hypothèses, les effets doppler associés à chacun des satellites de positionnement SN en vue, compte tenu de leurs positions approximatives et des distances qui les séparent du téléphone mobile UE.

Une fois en possession des valeurs estimées des positions, distances et effets doppler pour chaque couple d'hypothèses, le module de traitement MT peut alors déterminer pour chaque couple d'hypothèses une réplique de signal S, correspondant à la somme (ou accumulation) des signaux en bande L qui devraient être reçus, en provenance des satellites SN en vue, pendant l'intervalle temporel choisi, compte tenu du couple d'hypothèses considéré. La relation suivante est un exemple de réplique de signal dans le cas de couples d'hypothèses position/temps :

$$S_{k,n}(t) = \sum_{i=1}^{N_{SAT}} C_i(t - \tau_{i,k,n}) e^{2\pi i f_{i,k,n} t}$$

Le couple d'indices (k,n) représente ici le couple d'hypothèses position géographique / temps, i est l'indice désignant un satellite SN en vue, $N_{SAT}$ est le nombre de satellites SN en vue, $C_i$ désigne le code d'étalement du satellite i, $T_{i,k,n}$ est le retard temporel entre le temps GPS d'émission et le temps de réception reçus du satellite i, et $f_{i,k,n}$ est la fréquence reçue de cadencement de l'horloge du satellite SN en vue d'indice i, corrigée grâce à l'hypothèse de temps constellation / position approximative du terminal UE.

Cette accumulation du signal reçu sur un intervalle de temps choisi est ici rendue possible du fait que les satellites SN de la constellation CS sont synchronisés.

Le module de traitement MT sélectionne ensuite le couple d'hypothèses qui correspond à la réplique de signal qui présente une corrélation maximale avec le signal reçu (ou accumulé) pendant l'intervalle de temps.

Pour ce faire, il détermine préférentiellement, pour chaque réplique de signal, et donc pour chaque couple d'hypothèses, une fonction représentative de son énergie de corrélation avec la somme des signaux effectivement reçus sur l'intervalle choisi. On tire ainsi partie avantageusement de l'accumulation des signaux sur l'intervalle de temps choisi. L'estimation d'une fonction de corrélation est en effet grandement facilitée lorsque le signal est peu bruité.

Puis, le module de traitement MT retient la réplique de signal qui présente l'énergie (de corrélation) la plus forte.

Cette réplique de signal retenue correspond à un couple d'hypothèses qui est donc sélectionné. En d'autres termes, à la fin de ce traitement le module de traitement MT dispose des temps GPS et position du téléphone mobile UE qui sont les plus probables. Il peut donc se synchroniser sur chaque signal reçu d'un satellite SN en vue afin de déterminer les codes pseudo-aléatoires utilisés pour le moduler.

Une fois les codes pseudo-aléatoires déterminés, et donc une fois la synchronisation sur les codes pseudo-aléatoires effectuée, le module de traitement MT doit estimer finement les synchronisations, puis éventuellement démoduler.

Il est cependant préférable d'envisager un traitement additionnel préalable à la démodulation. En effet, le système d'augmentation de type SBAS et le réseau de positionnement par satellites de type GPS utilisent une technique d'étalement de spectre reposant sur des séquences périodiques de codes d'étalement, comme par exemple les codes de Gold. Or, la durée de ces séquences est en général vingt fois plus courte que la durée accordée à un bit d'information du signal. Par conséquent, la phase de synchronisation sur les codes pseudo-aléatoires doit être préférentiellement suivie d'une étape de synchronisation de bits.

La synchronisation de bits peut consister, par exemple, à « désétaler » (ou « despreading ») le signal à la cadence de la séquence de codes, c'est-à-dire 1 KHz, après avoir effectué la synchronisation de codes pseudo-aléatoires. On procède ensuite à une détection de fréquence en appliquant une transformée de Fourier rapide (ou FFT) au signal désétalé. Cela permet en effet d'estimer l'effet doppler résiduel avec une incertitude inférieure à environ 25 Hz. Pour ce faire, on peut par exemple effectuer une FFT sur 1024 échantillons, correspondant à environ une seconde (1 s). Puis, on procède à la correction de la fréquence détectée. Enfin, en utilisant un opérateur spécifique, on détermine la transition de bit en considérant que la séquence de codes est synchronisée sur le bit et que chaque bit est constitué de vingt (20) codes pseudo-alétaoires complets, ce qui correspond à 20 x 1 ms.

L'opérateur spécifique utilisé peut être par exemple du type suivant :

$$S(n) = \sum_{i=1}^{Nbit} \left| \sum_{k=1}^{20} S_{k+20*i+n} - \sum_{k=1}^{20} S_{k+20*(i-1)+n} \right|^2$$

où S représente un échantillon de signal désétalé à 1 KHz.

Par exemple, le signal S est calculé sur un nombre de bits (Nbit) égal à cinquante (50) pour une durée de signal d'une seconde.

Le maximum de S(n), lorsque n varie entre 0 et 19, donne la transition de bit.

Ce type de synchronisation de bits est particulièrement avantageux car il est peu consommateur de temps de calcul. De plus, il permet de décorréler les différents problèmes d'estimation introduits par le traitement des signaux GPS.

Une fois la synchronisation de bits effectuée, l'étape de détermination de la position peut commencer.

Le dispositif DPS comporte à cet effet un premier module de calcul MC1 chargé de déterminer pour chaque signal démodulé son temps de propagation entre le satellite SN en vue, qui l'a émis, et le téléphone mobile UE (ou plus précisément son dispositif DPS). Pour ce faire, il utilise la date d'émission du signal, intégrée dans ledit signal par le satellite qui l'a émis, et la date de réception associée au signal par le module d'émission/réception MER du dispositif DPS lors de sa réception.

Ces temps de propagation alimentent un deuxième module de calcul MC2 chargé de déterminer, à partir d'une part, des données de navigation contenues dans chaque signal et des données de navigation complémentaires contenues dans les messages SBAS traditionnels et/ou d'assistance reçus du système d'assistance (serveur SE), et d'autre part, du temps de propagation associé, la pseudo-distance entre le téléphone mobile UE et le satellite SN en vue, correspondant.

Les données d'assistance, qui peuvent remplacer ou compléter les données extraites des messages (ou signaux) provenant des satellites SN et qui peuvent être transmises à un dispositif DPS par le système d'assistance (serveur d'assistance SE), sont par exemple les éphémérides des satellites de positionnement SN en vue du téléphone mobile UE concerné, et/ou des corrections temporelles des satellites de positionnement SN en vue du téléphone mobile UE concerné, représentatives de l'écart temporel entre le temps GPS et l'horloge de cadencement du dispositif DPS du téléphone mobile UE concerné, et/ou des secondes corrections temporelles représentatives des perturbations induites par l'ionosphère sur la propagation des signaux transmis par les satellites de positionnement SN en vue du téléphone mobile UE concerné, et/ou des données représentatives d'un modèle tridimensionnel (3D) de la cellule dans laquelle le terminal requérant est situé.

Ces données de navigation complémentaires, et notamment les données de correction, sont utilisées par le deuxième module de calcul MC2 pour corriger les données de navigation transmises dans les signaux en bande L par les satellites SN en vue. Elles permettent d'améliorer la sensibilité des traitements et par conséquent d'améliorer la précision des calculs.

Mais certaines de ces données de navigation, comme par exemple les données du modèle 3D, peuvent également servir dans la phase suivante de détermination de la position.

Les pseudo-distances associées à chaque satellite SN en vue, déterminées par le deuxième module de calcul MC2, alimentent un troisième module de calcul MC3 chargé de déterminer la position du téléphone mobile UE. Plus précisément, le troisième module de calcul MC3 détermine la position au moins par une quadrilatération, et plus généralement par une résolution numérique de type méthode des moindres carrés à quatre inconnues et au moins quatre mesures, à partir des pseudo-distances (en général au nombre de quatre (4)), de certaines données de navigation corrigées et/ou de certaines données d'assistance, comme par exemple les données du modèle 3D de la cellule dans laquelle son téléphone mobile UE est situé.

Ce modèle 3D peut être particulièrement utile lorsque le troisième module de calcul MC3 ne dispose que de trois pseudo-distances pour déterminer la position du téléphone mobile UE. Ce cas peut notamment arriver dans les environnements difficiles où le téléphone mobile UE ne voit que trois satellites SN.

La sortie du troisième module de calcul MC3 alimente en positions le module de gestion MG du téléphone mobile UE.

Le dispositif DPS selon l'invention, et notamment ses module d'interrogation MI, module de traitement MT, modules de calcul MC1, MC2 et MC3, peuvent être réalisés sous la forme de circuits électroniques, de modules logiciels (ou informatiques), ou d'une combinaison de circuits et de logiciels.

Il est important de noter que le modèle 3D d'une cellule d'un réseau cellulaire (qui peut être transmis par le système d'assistance (serveur d'assistance SE) à un terminal mobile UE sous la forme de données de navigation complémentaires) peut être élaboré à partir des calculs de position effectués par les différents terminaux mobiles UE appartenant audit réseau cellulaire.

On peut en effet envisager que chaque dispositif DPS soit agencé de manière à transmettre au serveur d'assistance SE du système d'assistance, les pseudo-distances déterminées par son deuxième module de calcul MC2 (dans un mode de fonctionnement de type « MS-assisted »), ou bien les positions déterminées par son troisième module de calcul MC3 (dans un mode de fonctionnement de type « MS-based »), accompagnées de l'identifiant de la cellule dans laquelle il est implanté.

Le serveur d'assistance SE comprend alors un module de traitement PM chargé, lorsqu'il reçoit des données d'information représentatives de la position d'un terminal mobile UE (pseudo-distances ou positions), de les stocker dans sa base de données BD en correspondance de l'identifiant de la cellule du réseau cellulaire dans laquelle ce terminal mobile UE est situé.

Dans ce cas, le module de traitement PM est préférentiellement agencé de manière à déterminer des données auxiliaires représentatives de la qualité des données d'information reçues, puis à les mémoriser en correspondance de l'identifiant de cellule. On entend ici par « qualité » un paramètre physique tel que par exemple l'intensité ou le niveau du signal GSM reçu. Ces données auxiliaires peuvent notamment être utiles à l'opérateur du réseau de téléphonie mobile.

Il est également particulièrement avantageux que le module de traitement PM soit agencé de manière à élaborer progressivement un modèle tridimensionnel (3D) du réseau cellulaire à partir des identifiants de cellule et des données d'information et/ou données auxiliaires correspondantes. Plus précisément, le module de traitement PM peut déterminer la zone couverte par chaque cellule du réseau puisqu'il dispose des positions où les téléphones mobiles UE sont en mesure de communiquer. Bien entendu, le modèle 3D du réseau est stocké dans la base de données BD du serveur d'assistance SE. Il peut être mis à jour continuellement, ou de façon périodique, ou encore sur ordre, selon les besoins.

Comme indiqué précédemment, une portion de ce modèle 3D du réseau, représentant une cellule, peut ensuite être transmise au terminal mobile UE qui le requiert, sous la forme de données de navigation complémentaires.

Grâce à ces informations sur le réseau, obtenues de façon passive, sans qu'il faille effectuer des campagnes de mesures, l'opérateur du réseau dispose d'informations précieuses en trois dimensions (3D) qui lui permettent d'améliorer la couverture géographique de son réseau ou de procéder à une intervention de maintenance ou de réparation. On peut, en effet, ainsi déterminer les zones d'ombre, ou les zones dans lesquelles s'est produit un problème technique (zones d'ombres du système RNSS ou zones d'ombres du réseau de communications mobile). Cela peut également permettre de déterminer les zones d'ombres du système d'augmentation.

On peut également envisager une élaboration du modèle 3D du réseau cellulaire à la requête de son opérateur. Dans ce cas, on transmet aux dispositifs DPS, de préférence via le système d'assistance (SE), un message requérant de leur part la transmission des pseudo-distances ou positions qu'ils déterminent, pendant une durée choisie.

Dans une variante, on peut envisager que ce ne soit pas le serveur d'assistance SE qui détermine le modèle 3D du réseau cellulaire. Il est en effet possible de configurer les téléphones mobiles afin qu'ils transmettent au réseau cellulaire (et non au serveur d'assistance SE) les données d'informations représentatives des pseudo-distances ou positions calculées par leur dispositif DPS. Dans ce cas, le modèle 3D du réseau est transmis au système d'assistance SE par le réseau cellulaire afin d'être stocké dans sa base de données BD puis d'être transmis sous la forme de données de navigation complémentaires aux dispositifs DPS.

Le dispositif DPS selon l'invention peut être également agencé de manière à tenir compte de la dynamique du terminal mobile UE dans lequel il est implanté.

En effet, la synchronisation sur le signal reçu d'un satellite SN porte non seulement sur le délai entre le signal reçu (et plus précisément l'étalement de codes) et la réplique élaborée au niveau du dispositif DPS, mais également sur l'écart fréquentiel entre la fréquence du dispositif DPS et la fréquence du signal reçu.

Notamment, l'incertitude fréquentielle est induite par l'incertitude relative à l'oscillateur local, l'effet doppler dû au mouvement du satellite et l'effet doppler dû au mouvement du terminal mobile UE.

On peut montrer que la durée de l'intervalle temporel alloué à la détection du maximum de corrélation influe directement sur les performances. Plus cette durée (appelée « durée d'intégration cohérente ») est longue, meilleure est la réjection de bruit. Par conséquent, le rapport signal sur bruit après corrélation est inversement proportionnel à la durée d'intégration cohérente. En d'autres termes, l'amélioration de la sensibilité du dispositif DPS passe par l'augmentation de cette durée d'intégration cohérente.

Par ailleurs, le pas de discrétisation ($\delta f$) du domaine fréquentiel est d'autant plus petit que la durée d'intégration cohérente (Ti) est grande (on a typiquement la relation $\delta f = 1/2Ti$). Cela permet de minimiser les pertes pendant l'intégration cohérente.

Il découle de ces remarques que lorsqu'une hypothèse de fréquence ou une hypothèse de position géographique est testée, le dispositif DPS est d'autant plus sensible à un changement de fréquence, pendant la phase d'intégration, que le pas de discrétisation est petit. Or, la dynamique d'un terminal mobile UE est de nature à faire varier la phase du signal reçu et donc à induire des changements de fréquence. Par conséquent, l'amélioration de la sensibilité d'un dispositif DPS passe par la prise en compte de la dynamique du terminal mobile UE dans lequel il est implanté.

Ce phénomène est d'autant plus gênant que les conditions de réception sont mauvaises.

Pour tenter de remédier à cela, il a été proposé de limiter la durée d'intégration cohérente afin que le pas de discrétisation ne soit pas trop petit. Typiquement, on limite la largeur du pas de discrétisation à environ 500 Hz, ce qui correspond à une durée d'intégration cohérente de l'ordre de 1 ms. Ainsi, en effectuant une accumulation cohérente d'énergie du type de celle précédemment décrite, pendant une durée de 20 ms reposant sur vingt durées d'intégration cohérente de 1 ms chacune, la perte est d'environ 6,5 dB par rapport à une unique durée d'intégration cohérente de 20 ms.

Un autre aspect de l'invention a donc pour objet d'améliorer la situation en estimant directement la dynamique du terminal mobile UE pendant l'intégration plutôt que de limiter artificiellement la durée d'intégration cohérente.

L'invention propose à cet effet d'implanter dans le terminal mobile UE, et de préférence dans son dispositif de positionnement par satellites DPS, un dispositif de mesure DM chargé de mesurer son mouvement, sa vitesse et son accélération pendant la durée d'intégration cohérente.

Ce dispositif de mesure DM est plus préférentiellement agencé sous la forme d'un micro-système électromécanique (ou MEMS pour « Micro Electro Mechanical System ») à micro inertie. Tout type de MEMS à micro inertie peut être envisagé et notamment ceux utilisant un cantilever, ou une ou plusieurs lames suspendues, ou encore une structure en forme de H partiellement suspendue.

A partir des mesures délivrées par le dispositif de mesure DM et des données d'assistance précitées, et notamment les positions de satellites et la pré-localisation du terminal mobile UE, le module de traitement MT du dispositif DPS peut estimer la vitesse, l'accélération y et la variation d'accélération dy/dt (ou « jerk ») par rapport à chaque satellite SN en vue, et en déduire la phase induite devant être prise en compte dans le calcul de la réplique de signal lors de l'intégration cohérente (accumulation).

La réplique du signal peut alors être déterminée à l'aide d'une relation dérivée de la relation suivante qui correspond au cas de couples d'hypothèses de la grille balayée (position/temps système) :

$$S = \int_0^{Ti} S_r(t) r(t-\tau) e^{2\pi j (w_0 t + \frac{1}{2} w_0 \frac{\gamma}{c} t^2 + \frac{1}{3} w_0 \frac{d\gamma}{dt} t^3)}$$

où $w_0$ est le pas de discrétisation fréquentiel testé.

De la sorte, le temps d'intégration cohérente peut être augmenté et l'on peut exploiter un signal de pilotage (ou « pilot tone ») y compris durant la phase d'acquisition. Le pilot tone est un signal sans données, comme par exemple une modulation de phase à porteuse pure étalée. En outre, les mesures délivrées par le dispositif de mesure DM portent sur des paramètres qui varient très rapidement dans le temps et sont donc particulièrement bien adaptés aux courtes durées d'intégration.

L'invention offre également un procédé dédié à la détermination de la position d'un terminal mobile UE et comprenant comme le procédé de l'art antérieur une étape d'acquisition de codes pseudo-aléatoires, suivie d'une étape de détermination de la position du terminal mobile UE à partir des codes pseudo-aléatoires acquis et des données de navigation contenues dans les signaux reçus (lus dans les signaux de navigation reçus ou dans les messages d'assistance).

Celui-ci peut être notamment mis en oeuvre à l'aide de l'installation et des terminaux mobiles UE présentés ci-avant. Les fonctions et sous-fonctions principales et optionnelles assurées par les étapes de ce procédé étant sensiblement identiques à celles assurées par les différents moyens constituant l'installation et les terminaux mobiles UE, seules seront résumées ci-après les étapes mettant en oeuvre les fonctions principales du procédé selon l'invention.

Ce procédé consiste :

- à transmettre au terminal mobile UE, de préférence à sa demande, des données d'assistance représentatives du temps de référence (temps GPS) approximatif de la constellation CS et de sa position approximative, ainsi qu'éventuellement des éphémérides, des corrections ionosphériques, et analogues,
- puis, à déterminer des positions estimatives de la constellation CS, des distances estimatives entre le terminal mobile UE et chacun des satellites SN en vue, et des effets doppler associés, en fonction de couples d'hypothèses portant sur le temps de référence approximatif et la position approximative reçus,
- puis, à déterminer pour chaque couple d'hypothèses une réplique de signal correspondant aux positions et distances estimatives et aux effets doppler associés sur un intervalle de temps choisi, et
- à sélectionner le couple d'hypothèses qui correspond à la réplique de signal qui présente une corrélation maximale avec le signal reçu pendant l'intervalle de temps choisi, afin de déterminer les codes pseudo-aléatoires qui modulent chacun des signaux reçus.

L'invention ne se limite pas aux modes de réalisation de terminal mobile, de serveur d'assistance et de procédé décrits ci-avant, seulement à titre d'exemple, mais elle englobe toutes les variantes que pourra envisager l'homme de l'art dans le cadre des revendications ci-après.

Ainsi, dans ce qui précède il a été décrit une installation dans laquelle le réseau de télécommunications est un réseau cellulaire de type GSM/GPRS ou UMTS. Mais l'invention concerne également les réseaux radio de télécommunications de type satellitaire hybride avec répéteurs terrestres.

Une autre implémentation visant à l'enrichissement des données d'assistance par envoi d'informations tridimensionnelles de la cellule où se trouve le mobile consiste à :

- ce que le serveur de données d'assistance diffuse au mobile une densité de probabilité de masquage des signaux provenant de la constellation de satellites de navigation fonction de l'élévation & azimuth du point de vue du mobile,
- Ce que le mobile se serve des ces informations pour

  - soit initier sa recherche de satellite en commençant par les satellites qui ont la probabilité d'être bloqués la plus basse possible
  - soit pour améliorer un algorithme de multi-trajet en déduisant une probabilité de réflexion par observation de la densité probabilité de blocage.

L'avantage de ce type d'implémentation réside dans une économie de la quantité de données transmises du serveur vers le mobile.

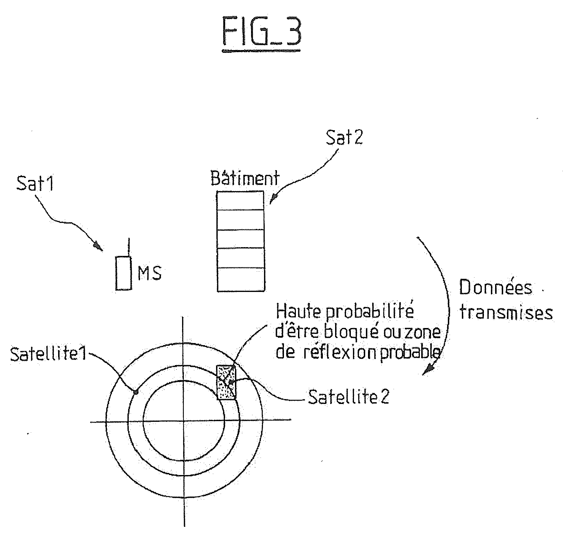

La figure 3 donne une illustration de la méthode. Le MS se trouve au centre la cellule. Un immeuble mlasque une partie de la visibilité selon un masque d'elevation azimuth. Ce masquage est transmis vers le MS parmi des données d'assistances sous la forme d'une densité de probabilité de masquage dans une direction donnée.

**Revendications**

1. Procédé d'enrichissement de données d'assistance de navigation pour la détermination de la position d'un terminal mobile, selon lequel un serveur de données d'assistance de navigation dans un réseau de téléphonie mobile enrichit ses données d'assistance à destination du terminal mobile grâce à des corrections diffusées par un système SBAS (du type WAAS, EGNOS, MSAS, etc...), lesdits enrichissements pouvant en outre être établis selon l'un des procédés suivants :

   - diffusion d'un modèle de navigation (Ephémerides) modifié de telle sorte qu'il prenne en compte une partie des corrections SBAS,
   - diffusion de corrections différentielles locales calculées sur la base des corrections diffusées par un système SBAS (du type WAAS, EGNOS, MSAS, etc...).

FIG.1

FIG.2

# FIG_3

Sat1

Bâtiment

Sat2

MS

Données
transmises

Haute probabilité
d'être bloqué ou zone
de réflexion probable

Satellite1

Satellite2

**Office européen**

**des brevets**

**RAPPORT DE RECHERCHE EUROPEENNE**

Numéro de la demande

EP 06 11 8126

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 6 323 803 B1 (BLOEBAUM LELAND SCOTT ET AL) 27 novembre 2001 (2001-11-27) * colonne 5, ligne 7 - colonne 6, ligne 57; figures 1-3 * | 1 | INV. G01S5/14 G01S1/00 |
| Y | US 2002/196181 A1 (FALL KEVIN R) 26 décembre 2002 (2002-12-26) * alinéa [0040] - alinéa [0043]; figure 4 * | 1 | |
| Y | US 6 529 830 B1 (ESCHENBACH RALPH) 4 mars 2003 (2003-03-04) * colonne 4, ligne 23 - colonne 8, ligne 62; figures 7-9 * * colonne 16, ligne 15 - colonne 17, ligne 14 * | 1 | |
| A | GAUTHIER L ET AL: "EGNOS: THE FIRST STEP IN EUROPE'S CONTRIBUTION TO THE GLOBAL NAVIGATION SATELLITE SYSTEM" ESA BULLETIN, ESA SCIENTIFIC AND PUBLICATIONS BRANCH. NOORDWIJK, NL, no. 105, février 2001 (2001-02), pages 35-42, XP001025014 ISSN: 0376-4265 * le document en entier * | 1 | **DOMAINES TECHNIQUES RECHERCHES (IPC)** G01S |

Le présent rapport a été établi pour toutes les revendications

| Lieu de la recherche | Date d'achèvement de la recherche | Examinateur |
|---|---|---|
| Munich | 10 octobre 2006 | FANJUL CAUDEVILLA, J |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 11 8126

La présente annexe indique les membres de la famille de brevets relatifs aux documents brevets cités dans le rapport de
recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

10-10-2006

| Document brevet cité au rapport de recherche | | Date de publication | Membre(s) de la famille de brevet(s) | | Date de publication |
|---|---|---|---|---|---|
| US 6323803 | B1 | 27-11-2001 | AT | 266871 T | 15-05-2004 |
| | | | AU | 5923600 A | 05-03-2001 |
| | | | CN | 1377465 A | 30-10-2002 |
| | | | DE | 60010720 D1 | 17-06-2004 |
| | | | DE | 60010720 T2 | 12-05-2005 |
| | | | EP | 1204883 A1 | 15-05-2002 |
| | | | JP | 2003506719 T | 18-02-2003 |
| | | | WO | 0111382 A1 | 15-02-2001 |
| US 2002196181 | A1 | 26-12-2002 | AUCUN | | |
| US 6529830 | B1 | 04-03-2003 | US | 6324473 B1 | 27-11-2001 |

EPO FORM P0460

Pour tout renseignement concernant cette annexe : voir Journal Officiel de l'Office européen des brevets, No.12/82